# EUROPEAN PATENT APPLICATION

(11) **EP 4 322 098 A1**
(43) Date of publication of application: **14.02.2024**
(21) Application number: 22784706.8
(22) Date of filing: 07.04.2022
(51) Int. Cl.: G06Q 50/08, G06F 30/13, G06T 19/20

(54) **MANAGEMENT ASSISTANCE SYSTEM FOR BUILDING OR CIVIL-ENGINEERING STRUCTURE**

(30) Priority: 09.04.2021 JP 2021066211
(71) Applicant: IXS Co., Ltd., Kawasaki-shi, Kanagawa, 212-0032 (JP)
(72) Inventor: YAMASAKI, Fuminori, Kawasaki-shi, Kanagawa 212-0032 (JP); KARINO, Takashi, Kawasaki-shi, Kanagawa 212-0032 (JP)
(74) Representative: TBK
(86) International application number: PCT/JP2022/017254
(87) International publication number: WO 2022/215724

(57) **Abstract**

Provided is a management assistance system capable of exactly comparing a building or a civil-engineering structure to be managed with design data, the system including a storage device 130 that stores building information modeling (BIM)-compliant, or construction information modeling (CIM)-compliant design data; a measuring device 110 that measures the building or the civil-engineering structure in a real space in a non-contact manner, to generate point cloud data; and a computer device 120 that processes the design data and the point cloud data, the computer device 120 being structured: to generate surface data that represents a surface of a shape represented by the point cloud data; to collate a joined data having the point cloud data and the surface data joined therein, with the design data; and to update the design data on the basis of result of collation.

## Description

### TECHNICAL FIELD

This invention relates to a management assistance system for building or civil-engineering structure.

### BACKGROUND ART

In response to recent publication of guidelines on BIM and CIM by Ministry of Land, Infrastructure, Transport and Tourism, BIM/CIM have been increasingly introduced into the fields of architecture and civil-engineering.

BIM is the abbreviation for building information modeling, by which a three-dimensional model of a building created on a computer will have various attribute data added thereto. Meanwhile, CIM is the abbreviation for construction information modeling, which is an idea of BIM applied to the civil-engineering field.

BIM/CIM introduced from the phases of planning, survey and design will make it easier to share information in the subsequent steps including construction and maintenance, and will streamline and upgrade a series of operations and businesses.

Introduction of BIM/CIM will also yield secondary effects that are expected, for example, to improve lives of citizens through better construction and maintenance of infrastructures, and to enhance motivation of workers in the fields of architecture and civil-engineering.

Considering the aforementioned situation, a series of various system proposals on the premise of introduction of BIM/CIM have been made (see Patent Literature 1 and Patent Literature 2, for example).

Patent Literature 1 discloses a system by which a point cloud model, obtained by scanning at different points in time, is converted by the voxel method to create new and old three-dimensional models, and the difference is extracted for analysis.

Patent Literature 2 discloses a system by which a point cloud is obtained by scanning each of a pre-modified structure and a modified structure, an area mutually shadowed is determined and deleted from each point cloud, and the results of deletion are compared to extract a difference between the structures.

### CITATION LIST

### PATENT LITERATURE

[Patent Literature 1] JP-2016-103263 A
[Patent Literature 2] JP-2019-211264 A

### SUMMARY OF THE INVENTION

### TECHNICAL PROBLEM

The systems disclosed in Patent Literature 1 and Patent Literature 2 are common in that they compare the point clouds that are obtained by scanning the structures to be inspected, and extract the difference.

The embodiments disclosed in these literatures are, however, merely a part of specific examples, leaving much room for proposals of undisclosed embodiments.

It is therefore an object of this invention to provide a management assistance system capable of exactly comparing a building or a civil-engineering structure to be managed with the design data.

### SOLUTION TO PROBLEM

According to this invention, there is provided a management assistance system for building or civil-engineering structure, the system including: a storage device that stores design data compliant to building information modeling (BIM) that three-dimensionally represents a building to be managed, or compliant to construction information modeling (CIM) that three-dimensionally represents a civil-engineering structure to be managed; a measuring device that measures the building or the civil-engineering structure in a real space in a non-contact manner, to generate point cloud data of the building or the civil-engineering structure; and a computer device that processes the design data stored in the storage device, and the point cloud data generated by the measuring device, the computer device being structured: to generate surface data that represents a surface of a shape represented by the point cloud data; to collate a joined data having the point cloud data and the surface data joined therein, with the design data; and to update the design data stored in the storage device, on the basis of result of collation.

Since the individual points in the point cloud data reside in a discrete manner, so that direct collation with the design data compliant to the three-dimensional BIM or CIM would tend to destabilize the result of collation.

On the other hand, this invention is structured to once generate surface data that represents a surface of a shape represented by the point cloud data, and then to collate a joined data having the point cloud data and the surface data joined therein, with the design data, so that the result of collation will be more likely to stabilize.

Hence, this invention can compare a building or a civil-engineering structure to be managed with the design data, more exactly than the prior technique.

### ADVANTAGEOUS EFFECTS OF INVENTION

This invention can provide a management assistance system capable of exactly comparing a building or a civil-engineering structure to be managed, with the design data.

### BRIEF DESCRIPTION OF DRAWINGS

FIG. 1 is a diagram illustrating a management assistance system in an embodiment of this invention.
FIG. 2 is a drawing schematically illustrating point cloud data measured with a laser scanner.
FIG. 3 is a drawing schematically illustrating joined data generated by a computer device.
FIG. 4 is a flowchart regarding the management assistance system.

### DESCRIPTION OF EMBODIMENTS

Embodiments of this invention will be explained below referring to the attached drawings. Note that all similar constituents in all drawings will have the same reference signs to properly skip the explanation as appropriate.

### < System Structure of Management Assistance System 100 >

First, a system structure of a management assistance system 100 will be explained.

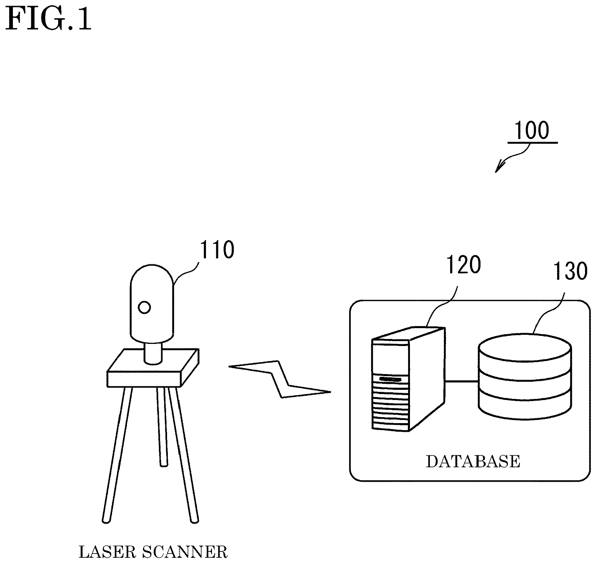

FIG. 1 is a diagram illustrating the management assistance system 100 in an embodiment of this invention.

As illustrated in FIG. 1, the management assistance system 100 has a laser scanner 110, and a database that contains a computer device 120 and a storage device 130.

The laser scanner 110 and the computer device 120 are structured in a mutually communicative manner. The computer device 120 can transmit various data to the laser scanner 110, and can save various data received from the laser scanner 110 (including point cloud data as a result of scanning) in the storage device 130.

The storage device 130 stores design data compliant to building information modeling (BIM) that three-dimensionally represents a building to be managed, or compliant to construction information modeling (CIM) that three-dimensionally represents a civil-engineering structure to be managed.

In the explanation of this embodiment, BIM means a three-dimensional model that three-dimensionally represents a building, by combining a plurality of objects that corresponds to the individual structures arranged to the building. Meanwhile, CIM means a three-dimensional model that three-dimensionally represents a civil-engineering structure, by combining a plurality of objects that corresponds to the individual structures arranged to the civil-engineering structure.

Note that the data stored in the storage device 130 is not limited to the design data, and may contain other data.

The laser scanner 110 is a measuring device that measures the building or the civil-engineering structure in a real space in a non-contact manner, to generate point cloud data of the building or the civil-engineering structure.

Note that, although the laser scanner 110 is specifically exemplified as the measuring device in this invention, the measuring device in this invention may alternatively be any other three-dimensional sensor so long as it can measure the building or civil-engineering structure in a non-contact manner to generate the point cloud data. For example, the measuring device in this invention may be embodied by a high-resolution camera that shoots the building or civil-engineering structure to be managed from many different angles. The point cloud data in this modified example may be generated while applying a photogrammetric technique.

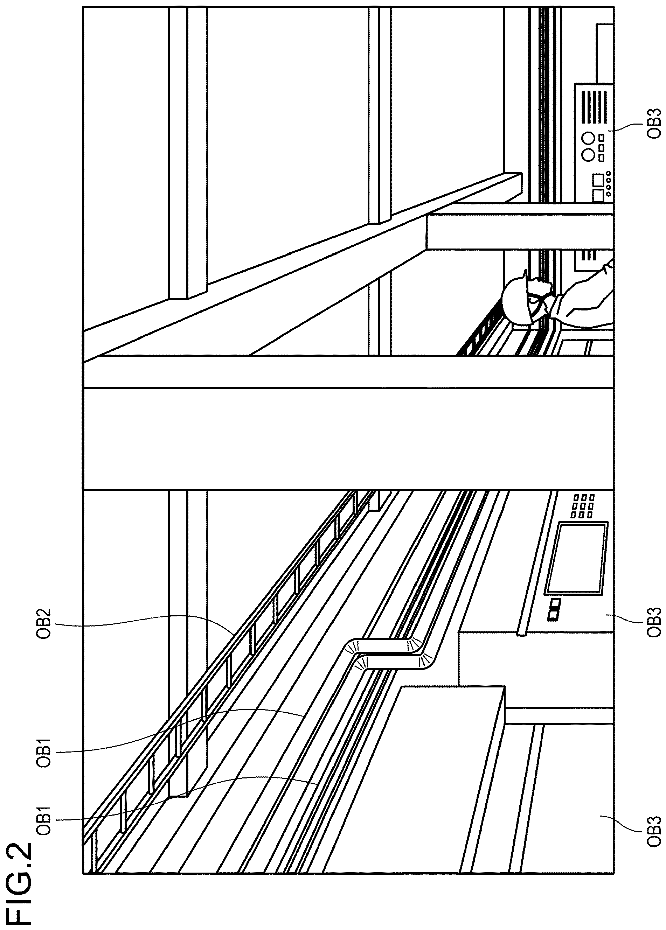

FIG. 2 is a drawing schematically illustrating the point cloud data measured with the laser scanner 110. The drawing illustrates the point cloud data obtained as a result of scanning of a part of a factory, in which a pipe OB1, a cable ladder OB2, a control equipment OB3, and the others (a worker, pillars, walls, etc.) are contained.

Note that, although the cable ladder OB2 is a member that assists laying of electric cables to be connected to the control equipment OB3, the drawing does not illustrate the electric cable for convenience.

The computer device 120 uses the design data stored in the storage device 130 and the point cloud data generated by the laser scanner 110, to execute at least the processes below.
(i) The computer device 120 generates surface data that represents a surface of a shape represented by the point cloud data.
(ii) The computer device 120 collates a joined data having the point cloud data and the surface data joined therein, with the design data.
(iii) The computer device 120 updates the design data stored in the storage device 130, on the basis of result of collation.

The surface data generated by the process (i) is data that represents a shape of the surface of a member, determined by detecting a feature from the point cloud data generated by the laser scanner 110, and then by analyzing the detected feature. For example, the computer device 120 executes the process (i) to analyze the point cloud data, to determine surface data that represents a cylinder, surface data that represents a rectangular parallelepiped, surface data that represents a lattice-like article, and so forth. The computer device 120, possibly employing various methods for generating the surface data, may generate the surface data typically by collation based on a technique of model-based object recognition (model-based matching).

The computer device 120 joins the surface data determined by the process (i), with the analyzed point cloud data, or, replace any portion that applies to the surface data in the point cloud data, with the surface data, to create an integrated data of the point cloud data and the surface data. The integrated data will be referred to as "joined data" in the explanation below.

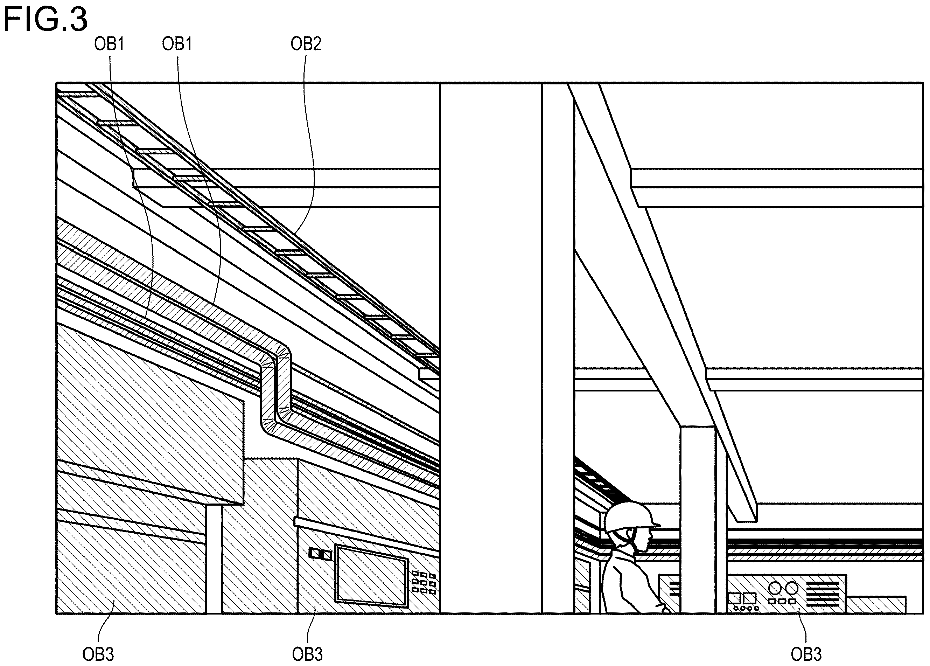

FIG. 3 is a drawing schematically illustrating the joined data generated by the computer device 120. The drawing depicts that the cylindrical shape (corresponded to the pipe OB1), the lattice-like shape (cable ladder OB2), and the rectangular parallelepiped shape (control equipment OB3) were extracted from the point data illustrated in FIG. 2, and that the hatched parts were replaced with the surface data.

Now, the shapes that appear in the non-hatched area (the worker, the pillars, the wall, etc.) do not constantly mean that they are undetectable by the analysis with the computer device 120, or rather these shapes may alternatively be detectable by the computer device 120.

Collation in the process (ii) specifically means a process for estimating a structure contained in the joined data on the basis of the shapes and layout of the surface data determined in the process (i), and mapping the structure to the object of the design data.

For example, the computer device 120 estimates a structure having a shape, if expected to be a cylinder, as the pipe; estimates a structure having a shape, if expected to be a rectangular parallelepiped, as the control equipment; and estimates a structure having a shape, if expected to be a lattice, as the cable ladder.

The computer device 120 can further map a portion in the point cloud data having failed to be replaced with the surface data, to an object in the design data, on the basis of the shape of the portion, and a positional relation relative to other portion having been replaced with the surface data and mapped to the object in the design data. For example, the computer device 120 can map a point cloud that resides at a position of a pillar, which is one of the unhatched area in FIG. 3 (a portion in the point cloud data having been failed to be replaced with the surface data), to an object of the pillar in the design data, on the basis of the shape of the area where the point cloud resides, and a positional relation relative to the hatched part (area replaced with the surface data) in FIG. 3.

In this way, the computer device 120 not only can map the point cloud which is replaceable with the surface data, to the object of the design data, but also can map the point which is not easily replaceable with the surface data, to the object of the design data.

This enables the management assistance system 100 to exactly map the point cloud data to the design data, reducing the number of object in the design data missing out from the mapping.

Update of the design data in the process (iii) is a collective expression for processes for modifying the design data stored in the storage device 130, on the basis of result of collation in the process (ii). The process (iii) will be detailed later.

### < Process Flow in Management Assistance System 100 >

Next, a process flow in the management assistance system 100 will be explained.

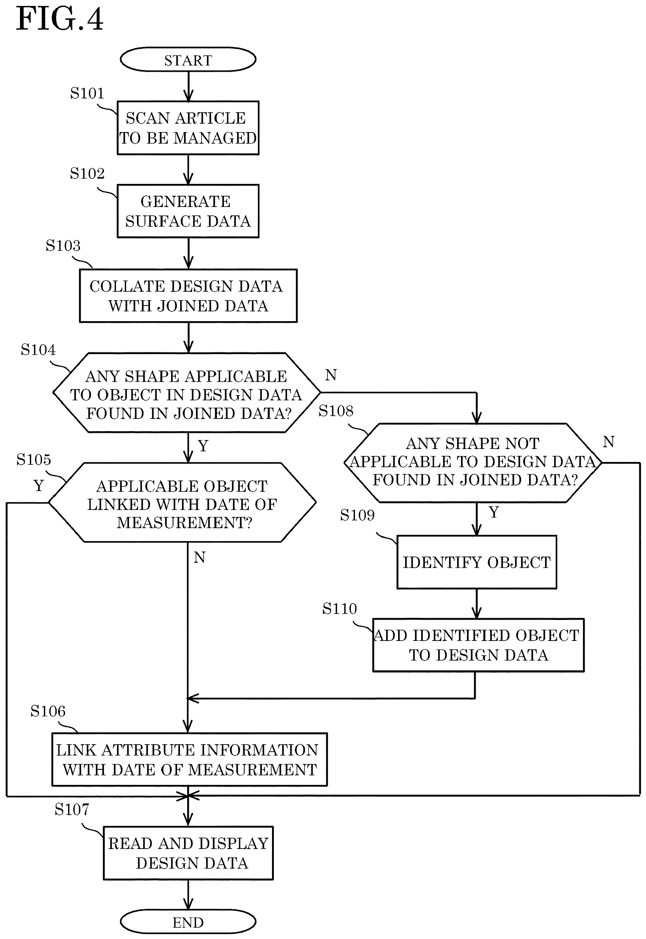

FIG. 4 is a flowchart regarding the management assistance system 100.

In step S101, the laser scanner 110 scans a building or a civil-engineering structure to be managed, and generates the point cloud data as a result of scanning.

In step S102, the computer device 120 generates the surface data on the basis of the point cloud data generated in step S101, and joins the surface data with the point cloud data.

In step S103, the computer device 120 collates the design data stored in the storage device 130, with the joined data generated in step S102.

In step S104, the computer device 120 judges whether a shape that applies to an object contained in the design data was detected from the joined data, or not, in the collation in step S103.

Now, the "detecting a shape that applies to an object contained in the design data from the joined data" is almost equivalent to that specific surface data or specific point cloud data contained in the joined data is mapped to an object contained in the design data, by a technique described in the process (ii).

If judged YES in step S104, the computer device 120 then judges whether the object mapped by the judgment has already been linked with the date of measurement, or not (step S105).

If judged YES in step S105, the object is deemed to be already collated, that is, the object has resided at the same place also in last measurement, so that the process skips the process in step S106, and advances to the process in step S107.

On the other hand, if judged NO in step S105, the object is deemed to be not yet collated, that is, the object has been newly installed at the position after last measurement, so that the process advances to the process in step S106.

If judged NO in step S104, the computer device 120 then judges whether the joined data contains any shape that applies to none of the object contained in the design data, or not (step S108).

If judged YES in step S108, since whether the point cloud is designed or not is unclear, so that the computer device 120 executes a process for identifying a BIM object or a CIM object that applies to the shape (step S109).

On the other hand, if judged NO in step S108, the process skips the process in step S109, and advances to the process of step S107.

If the process in step S109 successfully identified to which attribute of the object the shape applies, the computer device 120 adds the identified object to the design data, on the basis of a layout of the shape in the joined data (step S110). For example, although the joined data illustrated in FIG. 3 contains the lattice-like point cloud that applies to the cable ladder (cable ladder OB2), the actual construction site often has a layout of the cable ladder different from that in the design phase, since the quantity and dimension of the electric cables to be laid on the cable ladder are often unclear in the design phase of a building to be managed. In this situation, the computer device 120 can execute the processes in step S108 to step S110 to modify the design data stored in the storage device 130, according to the context of the actual situation.

Note in a case where the process failed to identify to which attribute of the object the shape applies in the process of step S109, the computer device 120 preferably leaves the design data unchanged for the shape. For example, although the joined data illustrated in FIG. 3 contains the point cloud that applies to the worker, the worker is not an article to be managed by the management assistance system 100, and therefore should not be reflected to the design data.

If judged NO in step S105, and, if a new object was added to the design data in the aforementioned step S110, the computer device 120 executes the process in step S106.

In step S106, the computer device 120 updates the design data stored in the storage device 130, and links the date of scanning in step S102 (the date of measurement with the laser scanner 110) to the attribute information (profile in an Industry Foundation Classes (IFC) file) of the object to be managed.

In step S107, the computer device 120 displays the design data stored in the storage device 130 on an unillustrated digital display device.

When displaying the object in the design data, the computer device 120 highlights the object in a color corresponded to the date of measurement linked to the attribute information of the object. In a case where the attribute information of the object in the design data is not linked to the date of measurement (that is, in a case where the object has not been installed at a position on the design basis), the computer device 120 turns the display of the object less noticeable than the highlighted display. Now, the "less noticeable display" may be normal display, semi-transparent display, or hidden (or completely transparent display).

Since the computer device 120 displays the design data on the display device after updating the design data as described above, so that the user can visually recognize the object arranged in the real space while discriminating it by the period of measurement. Moreover, the user can visually recognize the object arranged in the real space (the object judged YES in step S104), while discriminating it from an object not yet installed (other object).

Note in this embodiment since "day" is set for the measurement span to be linked with the attribute information of the object, so that the management assistance system 100 is suitable for daily work progress control of the building or civil-engineering structure under construction.

The measurement span to be linked with the object may, however, be altered to a longer span (such as "year" or "month") to make the management assistance system 100 suited to manage time-based degradation of a building or civil-engineering structure already constructed.

Alternatively, the measurement span to be linked with the object may be altered to a shorter one (such as "hour" or "minute"), depending on purpose of management of the building or civil-engineering structure.

As has been explained, the management assistance system 100 of this embodiment goes through the judgment in step S104 and the process in step S106, as a process for managing a phase in which the building or civil-engineering structure to be managed keeps changing in the real space.

The management assistance system 100 of this embodiment also goes thorough the judgment in step S108 and the process in step S110, while using the process for managing a phase in which the building or civil-engineering structure to be managed keeps changing in the real space, as the feature to be fed back to the design data.

Moreover, the management assistance system 100 of this embodiment also executes the process in step S107, in order to make the user easily recognize such features.

Given such features, the management assistance system 100 can exactly compare the building or civil-engineering structure to be managed, with the BIM- or CIM-compliant design data, and can properly assist management works of the user.

### < Modified Example >

The aforementioned embodiment of this invention may be modified in various ways, within the scope the purpose of this invention may be achieved.

A modified example having not been explained will be mentioned below.

The constituents contained in the system structure illustrated in FIG. 1 may be partially omitted, or any unillustrated constituent may be added. Again in the system structure illustrated in FIG. 1, a constituent illustrated as a single entity may alternatively be embodied by a plurality of constituents.

The steps (process and judgment) contained in the flowchart of FIG. 4 may be partially omitted, or any unillustrated step may be added.

At least a part of the process or judgment explained referring to the flowchart in FIG. 4 may rely upon machine learning, to which any known technique is applicable within the scope the purpose of this invention may be achieved.

The aforementioned embodiment has explained the case where, upon judged YES in step S 104 (that is, when a shape that applies to a first object contained in the design data was detected by collation from the joined data), the computer device 120 updates the design data, so as to make the first object distinguishable from other object.

In place of, or in addition to the process, the computer device 120 may implement a process for updating the design data stored in the storage device, when detecting by collation, from the design data, a second object that is not contained in a shape represented by the joined data, so as to make the second object distinguishable from other object.

The aforementioned embodiment relates to updating of the design data regarding a constructed object (first object) arranged as designed, meanwhile the modified example relates to updating of the design data regarding the designed but not yet constructed object (second object). They are, however, two sides of the same coin, yielding the same effect.

This embodiment encompasses the technical spirits below.
(1) A management assistance system for building or civil-engineering structure, the system including: a storage device that stores design data compliant to building information modeling (BIM) that three-dimensionally represents a building to be managed, or compliant to construction information modeling (CIM) that three-dimensionally represents a civil-engineering structure to be managed; a measuring device that measures the building or the civil-engineering structure in a real space in a non-contact manner, to generate point cloud data of the building or the civil-engineering structure; and a computer device that processes the design data stored in the storage device, and the point cloud data generated by the measuring device, the computer device being structured: to generate surface data that represents a surface of a shape represented by the point cloud data; to collate a joined data having the point cloud data and the surface data joined therein, with the design data; and to update the design data stored in the storage device, on the basis of result of collation.
(2) The management assistance system for building or civil-engineering structure according to (1), wherein the computer device, when detecting by collation in the joined data any shape that applies to none of objects contained in the design data, identifies a BIM object or a CIM object that applies to the shape, and updates the design data stored in the storage device, so as to add the identified object to a position where the object was detected.
(3) The management assistance system for building or civil-engineering structure according to (2), wherein the computer device, when updating the design data stored in the storage device so as to add the identified object to a position where the object was detected, links attribute information of the object, with measurement span at which the point cloud data collated with the design data was measured.
(4) The management assistance system for building or civil-engineering structure according to any one of (1) to (3), wherein the computer device maps a portion in the point cloud data having failed to be replaced with the surface data, to an object in the design data, on the basis of the shape of the portion, and a positional relation relative to other portion having been replaced with the surface data and mapped to the object in the design data.
(5) The management assistance system for building or civil-engineering structure according to any one of (1) to (4), wherein the computer device implements at least either: a process for updating the design data stored in the storage device, when detecting by collation, from the joined data, a shape that applies to a first object contained in the design data, so as to make the first object distinguishable from other object; or a process for updating the design data stored in the storage device, when detecting by collation, from the design data, a second object that is not contained in a shape represented by the joined data, so as to make the second object distinguishable from other object.
(6) The management assistance system for building or civil-engineering structure according to (5), wherein the computer device, when updating the design data stored in the storage device, links attribute information of the first object or the second object, with the measurement span at which the point cloud data collated with the design data was measured.
(7) The management assistance system for building or civil-engineering structure according to any one of (1) to (6), wherein the computer device executes an estimation process that estimates a structure contained in the joined data, on the basis of the shape of the generated surface data, and maps, when collating the joined data with the design data, the surface data, to the BIM object or the CIM object corresponded to the structure estimated by the estimation process.
(8) The management assistance system for building or civil-engineering structure according to (7), wherein the estimation process:
   estimates the structure as a pipe, if the shape represented by the surface data is cylindrical; and
   estimates the structure as a cable ladder, if the shape represented by the surface data is lattice-like.

This application claims priority to Japanese Patent Application No. 2021-66211 filed on April 9, 2021, the entire contents of which are incorporated by reference herein.

### REFERENCE SIGNS LIST

- 100: management assistance system
- 110: laser scanner
- 120: computer device
- 130: storage device

## Claims

1. A management assistance system for building or civil-engineering structure, the system comprising:
a storage device that stores design data compliant to building information modeling (BIM) that three-dimensionally represents a building to be managed, or compliant to construction information modeling (CIM) that three-dimensionally represents a civil-engineering structure to be managed;
a measuring device that measures the building or the civil-engineering structure in a real space in a non-contact manner, to generate point cloud data of the building or the civil-engineering structure; and
a computer device that processes the design data stored in the storage device, and the point cloud data generated by the measuring device,
the computer device being structured:
to generate surface data that represents a surface of a shape represented by the point cloud data;
to collate a joined data having the point cloud data and the surface data joined therein, with the design data; and
to update the design data stored in the storage device, on the basis of result of collation.

2. The management assistance system for building or civil-engineering structure according to claim 1,
wherein the computer device, when detecting by collation in the joined data any shape that applies to none of objects contained in the design data, identifies a BIM object or a CIM object that applies to the shape, and updates the design data stored in the storage device, so as to add the identified object to a position where the object was detected.

3. The management assistance system for building or civil-engineering structure according to claim 2,
wherein the computer device, when updating the design data stored in the storage device so as to add the identified object to a position where the object was detected, links attribute information of the object, with measurement span at which the point cloud data collated with the design data was measured.

4. The management assistance system for building or civil-engineering structure according to any one of claims 1 to 3,
wherein the computer device maps a portion in the point cloud data having failed to be replaced with the surface data, to an object in the design data, on the basis of the shape of the portion, and a positional relation relative to other portion having been replaced with the surface data and mapped to the object in the design data.

5. The management assistance system for building or civil-engineering structure according to any one of claims 1 to 4,
wherein the computer device implements at least either:
a process for updating the design data stored in the storage device, when detecting by collation, from the joined data, a shape that applies to a first object contained in the design data, so as to make the first object distinguishable from other object; or
a process for updating the design data stored in the storage device, when detecting by collation, from the design data, a second object that is not contained in a shape represented by the joined data, so as to make the second object distinguishable from other object.

6. The management assistance system for building or civil-engineering structure according to claim 5,
wherein the computer device, when updating the design data stored in the storage device, links attribute information of the first object or the second object, with the measurement span at which the point cloud data collated with the design data was measured.

7. The management assistance system for building or civil-engineering structure according to any one of claims 1 to 6,
wherein the computer device executes an estimation process that estimates a structure contained in the joined data, on the basis of the shape of the generated surface data, and
maps, when collating the joined data with the design data, the surface data, to the BIM object or the CIM object corresponded to the structure estimated by the estimation process.

8. The management assistance system for building or civil-engineering structure according to claim 7,
wherein the estimation process:
estimates the structure as a pipe, if the shape represented by the surface data is cylindrical; and
estimates the structure as a cable ladder, if the shape represented by the surface data is lattice-like.
